# DEMANDE DE BREVET EUROPEEN

(11) **EP 3 624 417 A1**
(43) Date de publication de la demande: **18.03.2020**
(21) Numéro de dépôt: 19194866.0
(22) Date de dépôt: 02.09.2019
(51) Int. Cl.: H04L 29/06, H04N 21/418, H04N 21/4367, H04N 21/61, H04N 21/643, H04L 29/08, H04N 21/45

(54) **COMMUNICATION SÉCURISÉE ENTRE UN MODULE CAM ET UN TERMINAL MOBILE DISPOSANT D'UNE CONNEXION AU RÉSEAU INTERNET**

(30) Priorité: 11.09.2018 FR 1858134
(71) Demandeur: NEOTION, 13400 Aubagne (FR)
(72) Inventeur: DEPERNET, Christophe, 83740 La Cadiere d'Azur (FR); CUBIDES CASTILLO, Jonathan, 59650 Villeneuve d'Ascq (FR); ALOUI, Nizar, 13400 Aubagne (FR)
(74) Mandataire: Roman, Alexis

(57) **Abrégé**

L'invention concerne un procédé de communication entre un module CAM et un terminal mobile disposant d'une connexion au réseau Internet, comprenant les étapes consistant à :
- connecter le module CAM à un téléviseur, lequel téléviseur dispose d'une connexion au réseau Internet,
- connecter un serveur informatique distant au réseau Internet,
**se caractérisant par le fait que :**
- on enregistre, dans une base de données du serveur, des données émises par le terminal mobile et/ou des données émises par le module CAM,
- la communication entre le module CAM et le serveur se fait exclusivement au travers de la connexion au réseau Internet du téléviseur,
- la communication entre le terminal mobile et le module CAM se fait exclusivement au travers du serveur.

## Description

### Domaine technique de l'invention.

L'invention a pour objet un procédé et un système de communication entre un module CAM (pour l'acronyme anglais Conditional Acces Module) et un terminal mobile disposant d'une connexion au réseau Internet.

Elle concerne le domaine technique de l'accès à des services utilisant des modules CAM. L'invention s'applique notamment à la télévision interactive, qui prévoit, pour les téléviseurs connectés et les décodeurs (« Set-top box »), de récupérer des informations et/ou d'ajouter des informations à afficher sur l'écran du téléviseur pendant que l'utilisateur regarde un programme de télévision (chaîne de télévision).

### État de la technique.

La figure 1, schématise une installation selon l'art antérieur, par exemple décrite dans le document brevet WO2018/024545 (SMARDTV). Un module CAM 1 est installé dans un appareil de réception multimédia 2 qui est ici un téléviseur.

Le téléviseur 2 dispose d'une connexion au réseau Internet R. Cette connexion peut être réalisée au travers d'une interface électronique 3 connectée au réseau internet R. La connexion C23 entre le téléviseur 2 et l'interface 3 peut être une connexion sans fil (Wifi, Bluetooth, infrarouge, NFC, ou autres) ou une connexion filaire (USB, Ethernet, ou autres).

L'interface 3 assure la connexion de l'appareil 2 au réseau Internet R, de sorte que ledit appareil peut communiquer avec un serveur informatique distant 4 pour la réception/transmission de signaux (images, sons, données, ...). L'interface 3 sert principalement de modem et de routeur, et assure la transmission des signaux entre l'appareil 2 et le serveur 4. Elle se présente sous la forme d'un décodeur ou d'un boîtier de connexion boîtier électronique du type Box Internet ou Set-Top-Box. Ce type de boîtier est généralement mis à la disposition d'un fournisseur d'accès à Internet à ses abonnés. L'interface électronique 3 peut également être directement intégrée dans l'appareil 2, comme par exemple dans le cas d'un téléviseur connecté.

Certains des reçus par l'interface 3 sont cryptés pour les protéger contre des accès non-autorisé. Leur accès est généralement soumis à des droits (paiement d'une taxe, condition d'âge, ....) que doivent acquérir spécifiquement les utilisateurs. Le module CAM 1 permet de décrypter ces signaux.

Un module CAM se présente sous la forme d'un boîtier amovible pourvu généralement d'un connecteur PCMCIA (pour l'acronyme anglais Personal Computer Memory Card International Association), lequel connecteur est adapté pour se connecter sur un connecteur PCMCIA complémentaire installé sur l'appareil 2. Le module CAM 1 intègre un lecteur de carte à puce qui coopère avec une carte à puce dans laquelle sont enregistrés les droits. La carte à puce contient en général des droits pour décrypter des signaux cryptés provenant d'une source bien définie telle que le serveur 4.

Le module CAM 1 peut être équipé d'un module de communication sans fil 10 (ex : Wifi, Bluetooth) intégré ou rapporté dans le boîtier du module CAM. Ce module de communication10 assure la connexion du module CAM 2 au réseau Internet R, de sorte que ledit module CAM peut communiquer avec le serveur 4 pour la réception/transmission de signaux (images, sons, données, ...). Le module de communication 10 assure également la connexion direct du module CAM 2 à un terminal mobile 5 (téléphone mobile, Smartphone, tablette tactile, ...). Le terminal 5 peut alors émettre des signaux vers le module CAM 2.

Des modules CAM 1 équipés d'un module de communication sans fil 10 présentent l'inconvénient de nécessiter l'ajout de matériels informatiques supplémentaires (hardware en anglais). Leur conception est de fait plus complexe et leur prix de revient onéreux.

En outre, le canal de communication entre le module CAM 2 et le terminal 5 n'est pas sécurisée. Une personne malveillante peut ainsi aisément utiliser son terminal 5 pour pirater le module CAM 2.

L'invention vise à remédier à cet état des choses. En particulier, un objectif de l'invention est de proposer un procédé de communication entre un module CAM et un terminal mobile qui ne nécessite pas de module CAM spécifique complexe et onéreux, mais qui peut au contraire être mis en oeuvre par des modules CAM classiques du commerce.

Un objectif subsidiaire de l'invention est de sécuriser le canal de communication entre le module CAM et le terminal mobile.

### Divulgation de l'invention.

La solution proposée par l'invention est un procédé de communication entre un module CAM et un terminal mobile disposant d'une connexion au réseau Internet, comprenant les étapes consistant à :
- établir une connexion entre le module CAM et un téléviseur, lequel téléviseur dispose d'une connexion au réseau Internet,
- établir une connexion entre un serveur informatique distant et le réseau Internet.

Ce procédé est remarquable en ce que :
- on enregistre, dans une base de données du serveur, des données émises par le terminal mobile et/ou des données émises par le module CAM,
- on établit une communication entre le module CAM et le serveur, laquelle communication se fait exclusivement au travers de la connexion au réseau Internet du téléviseur, ledit module CAM étant dépourvu de toute ressource informatique permettant de lui assurer une connexion directe audit réseau Internet
- on établit une communication entre le terminal mobile et le module CAM, laquelle communication se fait exclusivement au travers du serveur.

On utilise maintenant les ressources natives qui déjà embarquées dans le téléviseur pour assurer la communication entre le module CAM et le terminal mobile. Il n'est donc pas nécessaire de rajouter des composants électroniques supplémentaires au module CAM pour que ce dernier communique avec le serveur. En outre, dans la mesure où il n'y a aucune communication directe entre le module CAM et le terminal mobile, le canal de communication entre ledit module CAM et ledit terminal est parfaitement sécurisée, le serveur faisant office de tiers de confiance.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un premier mode de réalisation : - on associe un identifiant unique au module CAM ; - on génère, depuis le terminal mobile, des données ; on associe aux données générées par le terminal mobile, l'identifiant unique du module CAM ; - on transmet au serveur, les données associées à l'identifiant unique du module CAM ; - on enregistre dans la base de données, les données associées à l'identifiant unique du module CAM.
- Selon le premier mode de réalisation, le procédé comporte avantageusement les étapes consistant à : - générer depuis le module CAM, une requête d'interrogation contenant l'identifiant unique dudit module CAM ; - transmettre cette requête au serveur ; - en réponse à la réception de la requête par le serveur : interroger la base de données pour rechercher des données associées à l'identifiant unique du module CAM ; si la base de données contient des données associées à l'identifiant unique du module CAM, alors transmettre ces données audit module CAM.
- Selon un deuxième mode de réalisation, le procédé comporte les étapes consistant à : - associer un identifiant unique au terminal mobile ; générer depuis le terminal mobile, des données ; - associer aux données générées par le terminal mobile, l'identifiant unique dudit terminal ; - transmettre au serveur, les données associées à l'identifiant unique du terminal mobile ; - enregistrer dans la base de données, les données associées à l'identifiant unique du terminal mobile.
- Selon le deuxième mode de réalisation, le procédé comporte avantageusement les étapes consistant à : - générer depuis le module CAM, une requête d'interrogation contenant l'identifiant unique du terminal mobile ; transmettre cette requête au serveur ; - en réponse à la réception de la requête par le serveur : interroger la base de données pour rechercher des données associées à l'identifiant unique du terminal mobile ; - si la base de données contient des données associées à l'identifiant unique du terminal mobile, alors transmettre ces données au module CAM.
- Selon un mode de réalisation : - on associe un identifiant unique au module CAM ; - on génère depuis le module CAM, des données ; - on associe aux données générées par le module CAM, l'identifiant unique dudit module ; - on transmet au serveur, les données associées à l'identifiant unique du module CAM ; - on enregistre dans la base de données, les données associées à l'identifiant unique du module CAM.
- Avantageusement : - on génère depuis le terminal mobile, une requête d'interrogation contenant l'identifiant unique du module CAM ; on transmet cette requête au serveur ; - en réponse à la réception de la requête par le serveur : on interroge la base de données pour rechercher des données associées à l'identifiant unique du module CAM ; - si la base de données contient des données associées à l'identifiant unique du module CAM, alors on transmet ces données au terminal mobile.
- Dans une variante de réalisation, le procédé comporte les étapes consistant à : - associer un identifiant unique au terminal mobile ; - générer depuis le module CAM, des données ; - associer aux données générées par le module CAM, l'identifiant unique du terminal mobile ; - transmettre au serveur, les données associées à l'identifiant unique du terminal mobile ; - enregistrer dans la base de données, les données associées à l'identifiant unique du terminal mobile.
- Avantageusement : - on génère depuis le terminal mobile, une requête d'interrogation contenant l'identifiant unique dudit terminal ; - on transmet cette requête au serveur ; - en réponse à la réception de la requête par le serveur : on interroge la base de données pour rechercher des données associées à l'identifiant unique du terminal mobile ; - si la base de données contient des données associées à l'identifiant unique du terminal mobile, alors on transmet ces données audit terminal.
- Avantageusement, le procédé comporte une étape consistant à appairer préalablement le terminal mobile avec le module CAM, lequel appairage est réalisé au niveau du serveur informatique distant.

Un autre aspect de l'invention concerne un système de communication entre un module CAM et un terminal mobile disposant d'une connexion au réseau Internet, ledit système comprenant :
- un module CAM adapté pour se connecter à un téléviseur, lequel téléviseur dispose d'une connexion au réseau Internet,
- un serveur informatique distant connecté au réseau Internet,
- le serveur est connecté à une base de données dans laquelle sont enregistrées des données émises par le terminal mobile et/ou des données émises par le module CAM,
- le module CAM est adapté pour communiquer ;
   ∘ avec le serveur, exclusivement au travers de la connexion au réseau Internet du téléviseur,
   ∘ avec le terminal mobile, exclusivement au travers du serveur,
- le module CAM est dépourvu de toute ressource informatique permettant de lui assurer une connexion directe au réseau Internet.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 précitée schématise une installation selon l'art antérieur,
- la figure 2 schématise un système convenant à la mise en oeuvre du procédé objet de l'invention,
- la figure 3 illustre de manière simplifiée l'agencement de différents composants d'un serveur informatique distant utilisé dans l'invention,
- la figure 4 illustre de manière simplifiée l'agencement de différents composants d'un terminal mobile utilisé dans l'invention,
- la figure 5 est un diagramme illustrant différentes étapes du procédé objet de l'invention,
- la figure 6 est un diagramme illustrant différentes étapes du procédé objet de l'invention.

### Modes préférés de réalisation de l'invention.

Le système et le procédé objet de l'invention engendrent des manipulations d'éléments physiques, notamment des signaux et des données numériques, capables d'être stockés, transférés, combinés, comparés, ..., et permettant d'aboutir à un résultat souhaité.

L'invention met en oeuvre une ou plusieurs applications informatiques exécutées par des équipements informatiques. Par souci de clarté, il faut comprendre au sens de l'invention que « *un équipement fait quelque chose* » signifie « *l'application informatique exécutée par le processeur ou microprocesseur de l'équipement fait quelque chose* ». Tout comme « *l'application informatique fait quelque chose* » signifie « *l'application informatique exécutée par le processeur ou microprocesseur de l'équipement fait quelque chose* ».

Encore par souci de clarté, la présente invention peut faire référence à un ou plusieurs « *processus informatiques logiques* ». Ces derniers correspondent aux actions ou résultats obtenus par l'exécution d'instructions de différentes applications informatiques. Aussi, il faut également comprendre au sens de l'invention que « *un processus informatique logique est adapté pour faire quelque chose* » signifie « *les instructions d'une application informatique exécutées par un processeur ou microprocesseurs font quelque chose* ».

Encore par souci de clarté, les précisions suivantes sont apportées à certains termes utilisés dans la description et les revendications :
- « Ressource informatique » peut être compris de façon non limitative comme : composant, matériel, logiciel, fichier, connexion à un réseau informatique, quantité de mémoire RAM, espace de disque dur, bande passante, vitesse de processeur, nombre de CPU, hardware, etc.
- « Logiciel » peut être compris comme : application informatique, programmes informatiques ou software.
- « Base de données » peut être comprise de façon non limitative comme un ensemble structuré et organisé de données enregistrées sur des supports accessibles par des équipements informatiques et pouvant être interrogées, lues et mises à jour. Des données peuvent y être insérées, récupérées, modifiées et/ou détruites. La gestion et l'accès à la base de données peuvent être assurés par un ensemble de logiciels qui constituent un système de gestion de base de données (SGBD).
- « A et/ou B » signifie : A seul ou B seul ou A+B.

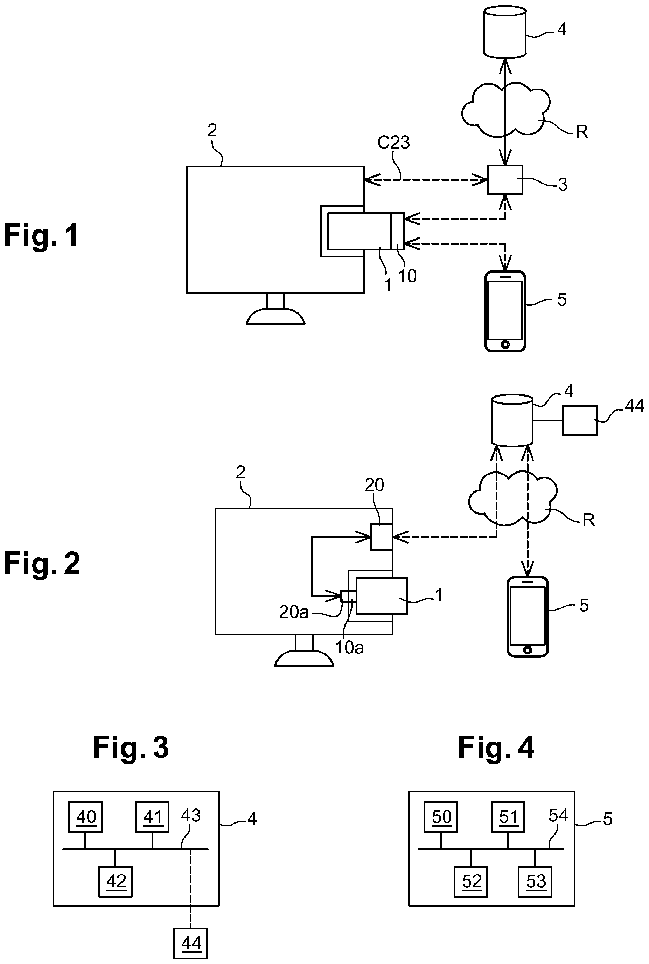

En se rapportant à la figure 2, la mise en oeuvre du procédé objet de l'invention nécessite l'utilisation d'un téléviseur 2 disposant d'une connexion au réseau Internet R (généralement désigné par TV connectée, SmartTV ou iDTV). Il peut s'agir d'un téléviseur 2 intégrant de manière native les ressources informatiques 20 nécessaires à cette connexion au réseau Internet R. La connexion au réseau Internet peut également être réalisé comme illustré sur la figure 1, en connectant le téléviseur 2 de manière filaire (ex : par câble Ethernet) ou sans fil (ex : par Wifi, ou courant porteur en ligne) à une Box Internet du type Freebox®, Livebox®, BBox®, etc.

Un module CAM 1 est connecté au téléviseur 2. Ce module CAM 1 est du type classique, par exemple commercialisé par la demanderesse sous la référence Titanium CAM, CryptoCAM, CI Plus Secure CAM, Advanced Security CAM VCAS™ DVB ou Pairing & Non Pairing Cam. En tant que besoin, l'homme du métier pourra se reporter aux fiches techniques de ces modules CAM à l'adresse suivante : https://neotion.fr/products/neotion-cam.php. Le module CAM est dépourvu de toute ressource informatique permettant de lui assurer une connexion directe au réseau Internet R.

Le module CAM 1 peut se présenter sous la forme d'un boîtier amovible pourvu d'un connecteur PCMCIA 10a adapté pour se connecter à un connecteur PCMCIA 20a complémentaire installé sur le téléviseur 2. Le module CAM 1 intègre un lecteur de carte à puce qui coopère avec une carte à puce dans laquelle sont notamment enregistrés des droits pour décrypter des signaux cryptés.

Le module CAM 1 est avantageusement associé à un identifiant unique (ID_CAM). Il peut s'agir d'un identifiant compris dans la carte à puce insérée dans le module CAM 1 ou un identifiant fourni par le serveur informatique distant 4 ou un autre serveur.

La mise en oeuvre du procédé objet de l'invention nécessite également l'utilisation d'un serveur informatique distant 4. Ce dernier peut consister en un serveur physique ou, dans certains cas, être composé de plusieurs ordinateurs distincts qui communiquent et interagissent sur un réseau pour exécuter les fonctions décrites plus avant.

En se rapportant à la figure 3, le serveur 4 comprend notamment un ou plusieurs processeurs ou microprocesseurs 40, une ou plusieurs mémoires 41, une interface réseau 42, qui sont mutuellement connectés via un bus 43. Une ou plusieurs applications informatiques - ou programmes informatiques - sont enregistrées dans la ou les mémoires 41 et dont les instructions, lorsqu'elles sont exécutées par le ou les processeurs 40 permettent de réaliser les fonctionnalités décrites plus avant dans la description.

L'interface réseau 42 est une interface de communication filaire ou sans fil adaptée pour établir une communication avec le téléviseur 2 (ou la box 3), le terminal mobile 5, et éventuellement une base de donnée 44, via le réseau Internet R et en employant des protocoles réseau standards, tels que IPv4 ou IPv6. L'interface réseau 42 permet notamment au serveur 4 de recevoir et émettre des signaux.

La base de données 44 peut être hébergée directement dans le serveur 4, ou dans un autre serveur ou dans un réseau de serveurs type Cloud Computing, ou dans un ordinateur.

Une application informatique est installée dans le serveur 4 pour mettre en oeuvre tout ou partie de l'invention depuis ledit serveur comme cela est expliqué plus avant dans la description. Cette application informatique peut être préinstallée sur le serveur 4 ou être téléchargée ultérieurement.

La mise en oeuvre du procédé objet de l'invention nécessite encore l'utilisation d'au moins un terminal mobile 5 se présentant préférentiellement sous la forme d'un téléphone mobile, Smartphone (téléphone intelligent), tablette tactile, ou sous la forme d'un autre appareil électronique, fonctionnant avec un système d'exploitation de type Windows, Mac, iOS, Android, etc. Le terminal mobile 5 est adapté pour être exploité par un utilisateur, qui, en pratique, est une personne physique.

En se rapportant à la figure 4, le terminal mobile 5 comprend notamment un ou plusieurs processeurs ou microprocesseurs 50, une ou plusieurs mémoires 51, une interface réseau 52, une interface graphique 53, qui sont mutuellement connectés via un bus 54. Une ou plusieurs applications informatiques - ou programmes informatiques - sont enregistrées dans la ou les mémoires 51 et dont les instructions (ou codes), lorsqu'elles sont exécutées par le ou les processeurs 50 permettent de réaliser les fonctionnalités décrites plus avant dans la description.

La ou les mémoires 51 doivent être considérées comme un dispositif de stockage également adapté pour stocker des données et/ou des fichiers de données. Il peut s'agir d'une mémoire native ou d'une mémoire rapportée telle qu'une carte Secure Digital (SD).

Le processeur 50 et la mémoire 51 peuvent être intégrés dans une carte SIM (de l'anglais Suscriber Identity Module), cette dernière étant connectée au bus 54.

L'interface réseau 52 est adaptée pour établir une communication avec le serveur S au travers du réseau Internet R.

L'interface graphique 53 offre à l'utilisateur/client la possibilité de saisir, sélectionner et/ou entrer des données ou des instructions. Il se présente par exemple sous la forme d'un écran tactile, d'un écran connecté à un clavier, etc.

L'utilisateur peut être amené à installer une application informatique dans son terminal mobile 5 pour mettre en oeuvre tout ou partie de l'invention depuis ledit terminal. L'application informatique peut être préinstallée sur le terminal 5 ou être téléchargée depuis boutique en ligne telles que Google Play®, Itunes® ou sur un site internet dédié. Les informations pour télécharger et installer l'application informatique sur le terminal 5 peuvent par exemple être récupérées à l'aide d'un code QR ou d'un tag NFC. En tout état de cause, l'application informatique peut être installée dans toute mémoire 51 du terminal 5.

Le terminal mobile 5 est associé à un identifiant unique. Il peut s'agir d'un code alphanumérique généré de manière aléatoire lors du téléchargement d'une application informatique permettant la mise en oeuvre de l'invention comme expliqué au paragraphe précédent. Il peut également s'agir du numéro de terminal mobile qui est son numéro d'appel (ou numéro MSISDN pour l'anglais Mobile Station Integrated Service Digital Network Number), ou un identifiant compris dans une carte SIM du terminal 5, ou encore un identifiant fourni par le serveur 4.

Le procédé objet de l'invention permet d'échanger des données entre le terminal 5 et le module CAM 1. Il n'y a pas de communication directe entre terminal 5 et le module CAM 1, toutes les communications passant par le serveur 4, ce dernier faisant office de tiers de confiance, notamment pour héberger et distribuer les données.

Les données qui transitent par le serveur 4 peuvent être générées depuis le terminal 5 et/ou depuis le module CAM 1.

A titre d'exemple, les données générées depuis le terminal 5 à destination du module CAM 1 peuvent être : des instructions pour que le module CAM 1 fasse un rappel à une date d1 d'une émission à visionner à la date d1 ou à une autre date d2 (ce rappel se présente par exemple sous la forme d'un message affiché sur l'écran du téléviseur 2) ; des instructions pour programmer l'enregistrement d'une émission ; des instructions pour l'ouverture de nouveaux droits permettant d'accéder à des chaines cryptées ; des instructions pour la mise en place d'un contrôle parental ; des instructions pour effectuer un changement de programme de façon automatique (forcée ou non) ; des instructions pour afficher quotidiennement un message sur l'écran du téléviseur 2 à une heure déterminée (ex : « les enfants, il est l'heure d'aller se coucher ») ; etc.

A titre d'exemple encore, les données générées depuis le module CAM 1 à destination du terminal 5 peuvent être : un récapitulatif de l'historique des chaînes visionnées et/ou de vidéos téléchargées ; des informations relatives à la date d'expiration d'un abonnement ; des informations relatives à des conditions d'abonnement et/ou d'accès à des chaines cryptées ; un récapitulatif de consommation ; etc.

Les données émises par le terminal mobile 5, respectivement par le module CAM 1, sont d'abord enregistrées dans la base de données 44 avant d'être transmises audit module CAM, respectivement audit terminal.

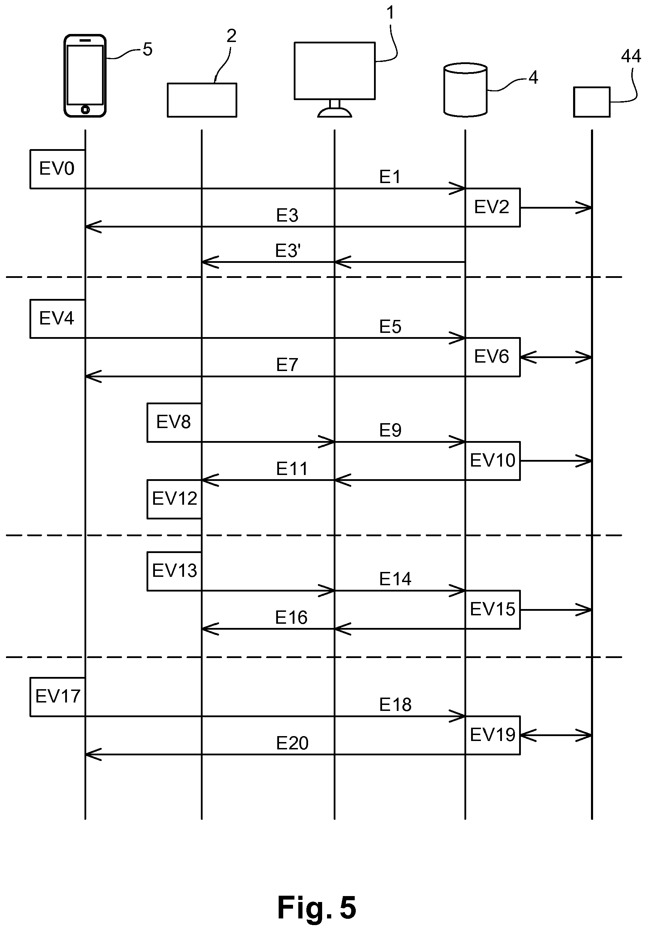

Pour sécuriser l'échange de données, il est avantageux, mais non nécessaire, d'appairer préalablement le terminal 5 avec le module CAM 1. On s'assure ainsi que les données ne transitent qu'entre deux couples d'éléments dûment identifiés et enregistrés auprès du serveur 4. Cet appairage est réalisé au niveau du serveur 4. Différentes étapes de cet appairage sont illustrées sur la figure 5.
**Evènement EV0 :** le terminal 5 récupère l'identifiant unique du module CAM 1 (ID_CAM). Selon un mode de réalisation préféré, le terminal 5 scanne un Code QR qui est apposé sur le boîtier du module CAM 1 ou qui s'affiche sur l'écran du téléviseur 2. Ce Code QR est préférentiellement codé avec : l'adresse URL du serveur 4 et l'identifiant ID_CAM. En scannant le code QR, le terminal 5 récupère automatiquement ces informations.
**Etape E1** : le terminal 5 se connecte au serveur 4, et lui transmet, au travers du réseau internet R, une requête d'appairage comportant l'ID_CAM et l'identifiant unique dudit terminal (ID_Terminal). Dans le mode de réalisation préféré, le scanne du Code QR par le terminal 5 entraîne la connexion automatique du terminal 5 à l'adresse URL du serveur 4 et le transfert, à ce dernier, de l'ID_CAM et de l'ID_Terminal.
**Evènement EV2** : le serveur 4 reçoit l'ID_CAM et l'ID_Terminal et associe ces deux identifiants dans sa base de données 44.
**Etape E3 :** de manière optionnelle, le serveur 4 peut renvoyer au terminal 5 un message de confirmation d'appairage.
**Etape E3' :** de manière optionnelle, le serveur 4 peut transmettre au module CAM 1, l'ID_Terminal. Cette transmission est réalisée au travers de la connexion au réseau Internet R du téléviseur 2. L'ID_Terminal est d'abord réceptionné par le téléviseur 2, puis transmis au module CAM 1 (via la connexion PCMCIA).

Cette technique permet de simplifier et d'automatiser l'appairage du terminal 5 avec le module CAM 1. Il est envisageable que le module CAM 1 soit appairé avec plusieurs terminaux mobiles (par exemple les terminaux des membres d'une même famille). Dans ce cas, le processus d'appairage de la figure 5 s'applique à chaque terminal et le serveur 4 associe l'ID_CAM à chacun des ID_Terminal.

Une tierce personne ou un autre appareil (par exemple un site internet sur lequel s'enregistre préalablement l'utilisateur du terminal 5), peut communiquer directement au serveur 4 le couple ID_CAM - ID_Terminal.

L'ID_Cam peut également être communiqué au terminal 5 suite à un enregistrement préalable dudit terminal auprès du serveur 4.

La figure 5 illustre également différentes étapes permettant d'échanger des données entre le terminal 5 et le module CAM 1.

### Transmission, au serveur 4, de données générées par le terminal 5 :

**Evènement EV4** : le terminal 5 génère des données (ex : des instructions pour l'ouverture de nouveaux droits) et les associe à l'ID_CAM.
**Etape E5** : le terminal 5 se connecte au serveur 4, et lui transmet, au travers du réseau internet R, ces données associées à l'ID_CAM.
**Evènement EV6** : le serveur 4 reçoit les données associées à l'ID_CAM et les enregistrent dans la basse de données 44.
**Etape E7** : de manière optionnelle, le serveur 4 peut renvoyer au terminal 5 un message de confirmation d'enregistrement des données.

### Récupération, par le module CAM 1, de données enregistrées dans la base de données 44 du serveur 4 :

**Evènement EV8 :** le module CAM 1 génère une requête d'interrogation contenant son ID_CAM. Cette requête d'interrogation peut être du type « y-a-t'il des données qui me concerne ? ». Cette requête peut être générée périodiquement, par exemple tout les jours à heure fixe ou dès la mise sous tension du téléviseur 2.
**Etape E9** : le module CAM 1 transmet cette requête au serveur 4. Cette transmission est réalisée au travers de la connexion au réseau Internet R du téléviseur 2. La requête est d'abord transmise au téléviseur 2 (via la connexion PCMCIA), puis transmise au serveur 4 par ledit téléviseur.
**Evènement EV10** : en réponse à la réception de la requête, le serveur 4 interroge la base de données 44 pour rechercher des données associées à l'ID_CAM. Si la base de données 44 contient des données associées à l'ID_CAM (ex : les instructions pour l'ouverture de nouveaux droits reçues à l'événement EV6), alors le serveur 4 récupère ces données.
**Etape E11** : le serveur 4 transmet au module CAM 1 les données récupérées dans la base de données 44. Cette transmission est réalisée au travers de la connexion au réseau Internet R du téléviseur 2. Les données sont d'abords réceptionnées par téléviseur 2, puis transmise au module CAM 1 (via la connexion PCMCIA).
**Evènement EV12 :** le module CAM 1 se reconfigure et/ou exécute les instructions correspondantes aux données reçues.

Durant l'événement EV10, si la base de données 44 ne contient pas de données associées à l'ID_CAM, alors le serveur 4 peut transmettre au module CAM 1 (à travers la connexion au réseau Internet du téléviseur 2), une information lui indiquant qu'il n'y a pas de données associées à l'ID_CAM.

### Transmission, au serveur 4, de données générées par le module CAM 1 :

**Evènement EV13** : le module CAM 1 génère des données (ex : historique des vidéos téléchargées et visionnées sur le téléviseur 2 durant le dernier mois écoulé) et les associe à son ID_CAM.
**Etape E14** : le module CAM 1 transmet au serveur 4, ces données associées à l'ID_CAM. Cette transmission est réalisée au travers de la connexion au réseau Internet R du téléviseur 2. Les données sont d'abord transmises au téléviseur 2 (via la connexion PCMCIA), puis transmises au serveur 4 par ledit téléviseur, à travers du réseau Internet R.
**Evènement EV15** : le serveur 4 reçoit les données associées à l'ID_CAM et les enregistrent dans la basse de données 44.
**Etape E16 :** de manière optionnelle, le serveur 4 peut renvoyer au module CAM 1 (toujours au travers de la connexion internet du téléviseur 2), une confirmation d'enregistrement des données.

### Récupération, par le terminal 5, de données enregistrées dans la base de données 44 du serveur 4 :

**Evènement EV17 :** le terminal 5 génère une requête d'interrogation contenant l'ID_CAM. Ces requête d'interrogation peut être du type « y-a-t'il des données qui concerne l'ID_CAM ? ». Cette requête peut être générée périodiquement, par exemple tout les jours à heure fixe ou suite à une action volontaire de l'utilisateur sur le terminal 5.
**Etape E18** : le terminal 5 se connecte au serveur 4, et lui transmet, au travers du réseau internet R, cette requête d'interrogation contenant l'ID_CAM.
**Evènement EV19** : en réponse à la réception de la requête, le serveur 4 interroge la base de données 44 pour rechercher des données associées à l'ID_CAM. Si la base de données 44 contient des données associées à l'ID_CAM (ex : l'historique des vidéos téléchargées et visionnées sur le téléviseur 2 durant le dernier mois écoulé et reçu à l'événement EV15), alors le serveur 4 récupère ces données.
**Etape E20** : le serveur 4 transmet au terminal 5, à travers le réseau Internet R, les données récupérées dans la base de données 44.

Durant l'événement EV19, si la base de données 44 ne contient pas de données associées à l'ID_CAM, alors le serveur 4 peut transmettre au terminal 5, une information lui indiquant qu'il n'y a pas de données associées à l'ID_CAM.

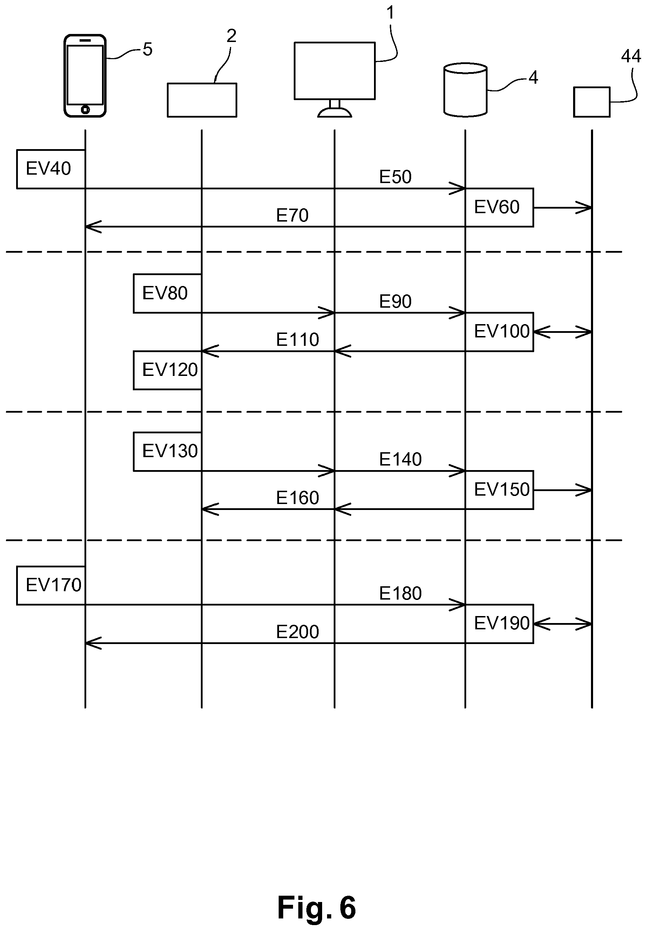

La figure 6 illustre une variante de réalisation des différentes étapes permettant d'échanger des données entre le terminal 5, le module CAM 1 et le serveur 4.

### Transmission, au serveur 4, de données générées par le terminal 5 :

**Evènement EV40** : le terminal 5 génère des données (ex : des instructions pour l'ouverture de nouveaux droits) et les associe à son ID_Terminal.
**Etape E50** : le terminal 5 se connecte au serveur 4, et lui transmet, au travers du réseau internet R, ces données associées à l'ID_Terminal.
**Evènement EV60 :** le serveur 4 reçoit les données associées à l'ID_Terminal et les enregistrent dans la basse de données 44.
**Etape E70** : de manière optionnelle, le serveur 4 peut renvoyer au terminal 5 un message de confirmation d'enregistrement des données.

### Récupération, par le module CAM 1, de données enregistrées dans la base de données 44 du serveur 4 :

**Evènement EV80 :** le module CAM 1 génère une requête d'interrogation contenant l'ID_Terminal. Cette requête d'interrogation peut être du type « y-a-t'il des données qui concerne l'ID_Terminal ? ». Cette requête peut être générée périodiquement, par exemple tout les jours à heure fixe ou dès la mise sous tension du téléviseur 2. L'ID_Terminal peut être communiqué au module CAM 1 par le serveur 4, par exemple durant l'étape E3' précitée (figure 5).
**Etape E90** : le module CAM 1 transmet cette requête au serveur 4. Cette transmission est réalisée au travers de la connexion au réseau Internet R du téléviseur 2. La requête est d'abord transmise au téléviseur 2 (via la connexion PCMCIA), puis transmise au serveur 4 par ledit téléviseur.
**Evènement EV100** : en réponse à la réception de la requête, le serveur 4 interroge la base de données 44 pour rechercher des données associées à l'ID_Terminal. Si la base de données 44 contient des données associées à l'ID_Terminal (ex : les instructions pour l'ouverture de nouveaux droits reçues à l'événement EV60), alors le serveur 4 récupère ces données.
**Etape E110** : le serveur 4 transmet au module CAM 1 les données récupérées dans la base de données 44. Cette transmission est réalisée au travers de la connexion au réseau Internet R du téléviseur 2. Les données sont d'abords réceptionnées par téléviseur 2, puis transmise au module CAM 1 (via la connexion PCMCIA).
**Evènement EV120** : le module CAM 1 se reconfigure et/ou exécute les instructions correspondantes aux données reçues.

Durant l'événement EV100, si la base de données 44 ne contient pas de données associées à l'ID_Terminal, alors le serveur 4 peut transmettre au module CAM 1 (à travers la connexion au réseau Internet du téléviseur 2), une information lui indiquant qu'il n'y a pas de données associées à l'ID-Terminal.

### Transmission, au serveur 4, de données générées par le module CAM 1 :

**Evènement EV130** : le module CAM 1 génère des données (ex : historique des vidéos téléchargées et visionnées sur le téléviseur 2 durant le dernier mois écoulé) et les associe à l'ID-Terminal. L'ID_Terminal peut être communiqué au module CAM 1 par le serveur 4, par exemple durant l'étape E3' précitée (figure 5).
**Etape E140** : le module CAM 1 transmet au serveur 4, ces données associées à l'ID-Terminal. Cette transmission est réalisée au travers de la connexion au réseau Internet R du téléviseur 2. Les données sont d'abord transmises au téléviseur 2 (via la connexion PCMCIA), puis transmise au serveur 4 par ledit téléviseur, à travers du réseau Internet R.
**Evènement EV150:** le serveur 4 reçoit les données associées à l'ID_Terminal et les enregistrent dans la basse de données 44.
**Etape E160** : de manière optionnelle, le serveur 4 peut renvoyer au module CAM 1 (toujours au travers de la connexion internet du téléviseur 2), une confirmation d'enregistrement des données.

### Récupération, par le terminal 5, de données enregistrées dans la base de données 44 du serveur 4 :

**Evènement EV170 :** le terminal 5 génère une requête d'interrogation contenant son ID_Terminal. Ces requête d'interrogation peut être du type « y-a-t'il des données qui me concerne ? ». Cette requête peut être générée périodiquement, par exemple tout les jours à heure fixe ou suite à une action volontaire de l'utilisateur sur le terminal 5.
**Etape E180** : le terminal 5 se connecte au serveur 4, et lui transmet, au travers du réseau internet R, cette requête d'interrogation contenant l'ID-Terminal.
**Evènement EV190** : en réponse à la réception de la requête, le serveur 4 interroge la base de données 44 pour rechercher des données associées à l'ID_Terminal. Si la base de données 44 contient des données associées à l'ID_Terminal (ex : l'historique des vidéos téléchargées et visionnées sur le téléviseur 2 durant le dernier mois écoulé et reçu à l'évènement EV150), alors le serveur 4 récupère ces données.
**Etape E200** : le serveur 4 transmet au terminal 5, à travers le réseau Internet R, les données récupérées dans la base de données 44.

Durant l'évènement EV190, si la base de données 44 ne contient pas de données associées à l'ID_Terminal, alors le serveur 4 peut transmettre au terminal 5, une information lui indiquant qu'il n'y a pas de données associées à l'ID_Terminal.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- Les données générées par le terminal mobile 5 et/ou les données générées par le module CAM 1, peuvent être associées à identifiant unique dudit terminal et à l'identifiant unique dudit module CAM. Dans ce cas, les requêtes d'interrogation contiennent chacun de ces identifiants.
- Le module CAM 1 n'est pas nécessairement pourvu d'un connecteur PCMCIA. La connexion entre le téléviseur 2 et le module CAM 1 peut par exemple être réalisée au moyen d'un connecteur USB ou HDMI. Par USB, on entend toutes les connexions physiques généralement utilisées pour permettre l'exécution du standard de communication USB, y compris USB, mini-USB et micro-USB. De même, par HDMI, on entend toutes les connexions HDMI connues dans la mesure où elles sont configurées pour fonctionner selon le standard de communication HDMI, y compris HDMI, mini-HDMI et micro-HDMI.

## Revendications

1. Procédé de communication entre un module CAM (1) et un terminal mobile (5) disposant d'une connexion au réseau Internet (R), comprenant les étapes consistant à :
- établir une connexion entre le module CAM (1) et un téléviseur (2), lequel téléviseur dispose d'une connexion au réseau Internet (R),
- établir une connexion entre un serveur informatique distant (4) et le réseau Internet (R),
**se caractérisant par le fait que :**
- on enregistre, dans une base de données (44) du serveur (4), des données émises par le terminal mobile (5) et/ou des données émises par le module CAM (1),
- on établit une communication entre le module CAM (1) et le serveur (4), laquelle communication se fait exclusivement au travers de la connexion au réseau Internet du téléviseur (2), ledit module CAM étant dépourvu de toute ressource informatique permettant de lui assurer une connexion directe audit réseau Internet,
- on établit une communication entre le terminal mobile (5) et le module CAM (1), laquelle communication se fait exclusivement au travers du serveur (4).

2. Procédé selon la revendication 1, comportant les étapes consistant à :
- associer un identifiant unique au module CAM (1),
- générer, depuis le terminal mobile (5), des données,
- associer aux données générées par le terminal mobile (5), l'identifiant unique du module CAM (1),
- transmettre au serveur (4), les données associées à l'identifiant unique du module CAM (1),
- enregistrer dans la base de données (44), les données associées à l'identifiant unique du module CAM (1).

3. Procédé selon la revendication 2, comportant les étapes consistant à :
- générer depuis le module CAM (1), une requête d'interrogation contenant l'identifiant unique dudit module CAM,
- transmettre cette requête au serveur (4),
- en réponse à la réception de la requête par le serveur (4) : interroger la base de données (44) pour rechercher des données associées à l'identifiant unique du module CAM (1),
- si la base de données (44) contient des données associées à l'identifiant unique du module CAM (1), alors transmettre ces données audit module CAM.

4. Procédé selon la revendication 1, comportant les étapes consistant à :
- associer un identifiant unique au terminal mobile (5),
- générer depuis le terminal mobile (5), des données,
- associer aux données générées par le terminal mobile (5), l'identifiant unique dudit terminal,
- transmettre au serveur (4), les données associées à l'identifiant unique du terminal mobile (5),
- enregistrer dans la base de données (44), les données associées à l'identifiant unique du terminal mobile (5).

5. Procédé selon la revendication 4, comportant les étapes consistant à :
- générer depuis le module CAM (1), une requête d'interrogation contenant l'identifiant unique du terminal mobile (5),
- transmettre cette requête au serveur (4),
- en réponse à la réception de la requête par le serveur (4) : interroger la base de données (44) pour rechercher des données associées à l'identifiant unique du terminal mobile (5),
- si la base de données (44) contient des données associées à l'identifiant unique du terminal mobile (5), alors transmettre ces données au module CAM (1).

6. Procédé selon l'une des revendications 1 à 5, comportant les étapes consistant à :
- associer un identifiant unique au module CAM (1),
- générer depuis le module CAM (1), des données,
- associer aux données générées par le module CAM (1), l'identifiant unique dudit module,
- transmettre au serveur (4), les données associées à l'identifiant unique du module CAM (1),
- enregistrer dans la base de données (44), les données associées à l'identifiant unique du module CAM (1).

7. Procédé selon la revendication 6, comportant les étapes consistant à :
- générer depuis le terminal mobile (5), une requête d'interrogation contenant l'identifiant unique du module CAM (1),
- transmettre cette requête au serveur (4),
- en réponse à la réception de la requête par le serveur (4) : interroger la base de données (44) pour rechercher des données associées à l'identifiant unique du module CAM (1),
- si la base de données (44) contient des données associées à l'identifiant unique du module CAM (1), alors transmettre ces données au terminal mobile (5).

8. Procédé selon l'une des revendications 1 à 5, comportant les étapes consistant à :
- associer un identifiant unique au terminal mobile (5),
- générer depuis le module CAM (1), des données,
- associer aux données générées par le module CAM (1), l'identifiant unique du terminal mobile (5),
- transmettre au serveur (4), les données associées à l'identifiant unique du terminal mobile (5),
- enregistrer dans la base de données (44), les données associées à l'identifiant unique du terminal mobile (5).

9. Procédé selon la revendication 8, comportant les étapes consistant à :
- générer depuis le terminal mobile (5), une requête d'interrogation contenant l'identifiant unique dudit terminal,
- transmettre cette requête au serveur (4),
- en réponse à la réception de la requête par le serveur (4) : interroger la base de données (44) pour rechercher des données associées à l'identifiant unique du terminal mobile (5),
- si la base de données (44) contient des données associées à l'identifiant unique du terminal mobile (5), alors transmettre ces données audit terminal.

10. Procédé selon l'une des revendications précédentes, comportant une étape consistant à appairer préalablement le terminal mobile (5) avec le module CAM (1), lequel appairage est réalisé au niveau du serveur informatique distant (4).

11. Système de communication entre un module CAM (1) et un terminal mobile (5) disposant d'une connexion au réseau Internet (R), ledit système comprenant :
- un module CAM (1) adapté pour se connecter à un téléviseur (2), lequel téléviseur dispose d'une connexion au réseau Internet (R),
- un serveur informatique distant (4) connecté au réseau Internet (R),
**se caractérisant par le fait que** :
- le serveur (4) est connecté à une base de données (44) dans laquelle sont enregistrées des données émises par le terminal mobile (5) et/ou des données émises par le module CAM (1),
- le module CAM (1) est adapté pour communiquer ;
∘ avec le serveur (4), exclusivement au travers de la connexion au réseau Internet (R) du téléviseur (2),
∘ avec le terminal mobile (5), exclusivement au travers du serveur (4).
- le module CAM (1) est dépourvu de toute ressource informatique permettant de lui assurer une connexion directe au réseau Internet (R).

12. Système selon la revendication 11, dans lequel le module CAM (1) se présente sous la forme d'un boîtier amovible pourvu d'un connecteur PCMCIA (10a) adapté pour se connecter à un connecteur PCMCIA (20a) complémentaire installé sur le téléviseur (2).

13. Système selon l'une des revendications 11 ou 12, dans lequel le terminal mobile (5) est préalablement appairé avec le module CAM (1), lequel appairage est réalisé au niveau du serveur informatique distant (4).
